# EUROPEAN PATENT SPECIFICATION

(11) **EP 0 509 775 B1**
(45) Date of publication and mention of the grant of the patent: **03.09.1997**
(21) Application number: 92303371.6
(22) Date of filing: 15.04.1992
(51) Int. Cl.: G01S 5/14

(54) **Remote monitoring and controlling system for moving bodies**
System zur Überwachung und Steuerung von sich bewegenden Objekten aus der Entfernung
Système pour surveiller et contrôler des mobiles à distance

(30) Priority: 19.04.1991 JP 88360/91; 19.04.1991 JP 88361/91
(43) Date of publication of application: 21.10.1992
(73) Proprietor: PIONEER ELECTRONIC CORPORATION, Meguro-ku Tokyo-to (JP)
(72) Inventor: Tsuda, Youichirou, Meguro-ku, Tokyo (JP); Inazawa, Takeshi, Meguro-ku, Tokyo (JP)
(74) Representative: Brunner, Michael John

(56) References cited:
- EP-A- 0 379 198
- EP-A- 0 509 777
- WO-A-89/12835
- IEEE TRANSACTIONS ON VEHICULAR TECHNOLOGY vol. 40, no. 1, February 1991, New York, US, pp 57-63; JACOBS ET AL.: 'The Application of a Novel Two-Way Mobile Satellite Communications and Vehicle Tracking System to the Transportation Industry'

## Description

The present invention relates to a remote monitoring and controlling of moving bodies such as humans, automobiles, aircraft and ships. More specifically, the invention relates to the system of the above type which is suitable for intensively controlling a plurality of moving bodies from one location.

Many companies presently conduct their business activities using automobiles (hereinafter referred to as "moving bodies") such as trucks, hired cars and taxicabs. If a company uses a large number of moving bodies, it may be required, in order to efficiently utilize the moving bodies, to precisely know the operating status of the respective moving bodies and to conduct the transportation management in accordance with the operating status.

Presently, in most cases, the operation status is known by regular-basis communication from drivers to headquarters (e.g., transportation center) using a telephone, radio communication device, etc., or by drivers' daily reports.

However, in order to efficiently use the moving bodies, it is preferable to know their operating status on a real-time basis, specifically in such fields as cash transportation, load transportation and police.

An object of the present invention is to provide a remote monitoring and controlling system of moving bodies, which is capable of efficiency utilizing the moving bodies by intensively monitoring their movement status on a real-time basis in a detailed manner.

EP-A-0379198 discloses a mobile object navigation system. WO-A-8912835 discloses a road vehicle position monitoring system with central control.

According to the present invention, there is provided a remote monitoring and controlling system for a plurality of moving bodies, comprising:
a moving body terminal, at each of the plurality of moving bodies, comprising:
   means for detecting a position of an associated moving body; and
   means for transmitting positional information indicating the detected position; and a center control apparatus comprising:
   means for receiving the positional information;
   means for storing the received positional information of the plurality of moving bodies; and
   control means for producing image information including position data and map data based on the stored positional information; characterised by:
   the center control apparatus including means for displaying, in a total display mode, the positions of the plurality of moving bodies in an entire operating area thereof such that they are superimposed on a map including the entire operating area based on the image information; and
the position detecting means comprising:
a GPS receiver (20) for receiving a position determining signal from a GPS satellite, and for producing positional information for the associated moving body based upon the received position determining signal;
a speed detecting device (22), provided in the associated moving body, for detecting the speed of movement of the associated moving body to produce a speed signal;
a movement direction detecting device, provided in the associated moving body, for detecting the direction of movement of the associated moving body to produce a direction signal; and
a data processing device for producing the positional information based on the speed signal and the direction signal.

In the drawings:-
Fig. 1 is a block diagram showing the whole construction of a remote monitoring and controlling system according to the present invention;
Fig. 2 is a block diagram showing the construction of a center control apparatus according to the invention;
Fig. 3 is a block diagram showing a moving body terminal according to the invention;
Fig. 4 is a block diagram showing an example of a display;
Fig. 5 is a flowchart showing a total display operation of moving body information;
Fig. 6 is a diagram showing an example of a picture appearing on the display in the total display operation;
Fig. 7 is a diagram showing an example of a picture in which a movement locus of a moving body is displayed;
Fig. 8 is a flowchart showing an operation of searching positions of moving bodies in a specified area;
Fig. 9 is a diagram showing an example of a picture for defining the area of searching moving body positions; and
Fig. 10 is a diagram showing an example of a picture in which results of the position search are displayed.

Embodiments of the present invention are described hereinafter with reference to the accompanying drawings.

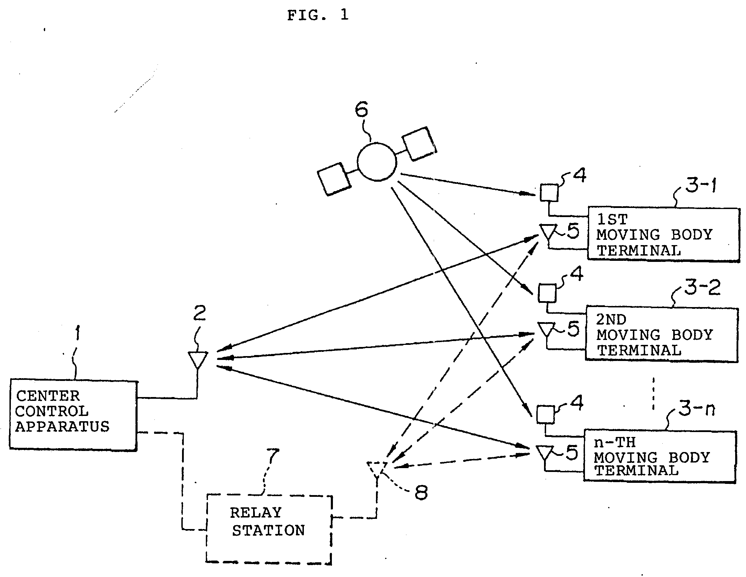

Fig. 1 is a block diagram of an entire system of remotely monitoring and controlling moving bodies. A center control apparatus 1 is installed at headquarters which are located at a place suitable for operating the system under consideration. On the other hand, a first moving body terminal 3-1, second moving body terminal 3-2, ...., n-th moving body terminal 3-n are installed on respective moving bodies which move according to their own operating schedules in a geographical area to which the system under consideration is applied. Each of the first to n-th moving body terminals 3-1, 3-1, ...., 3-n detects its own location, for instance, on the basis of a position-determining radio signal which is sent from an artificial satellite 6 and received by a GPS antenna 4, and transmits information on its present location to the center control apparatus 1 by radio communication via antennas 5, 2 or by wired communication via commercial lines (a relay station 7). The center control apparatus 1 displays an image containing a map of the operating area and movement information such as present locations of the respective moving bodies on the basis of the transmitted information on the present locations.

Each of the above units is described below in detail.

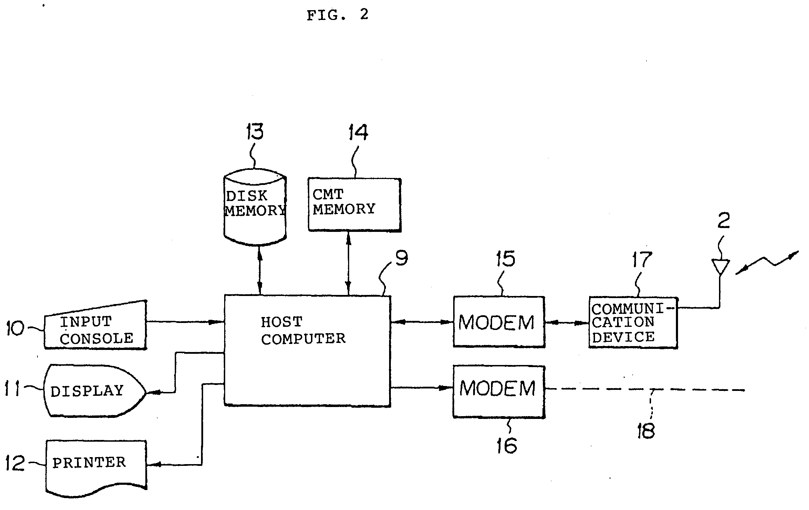

Fig. 2 shows the construction of the center control apparatus 1. A host computer 9 as a main part of the center control apparatus 1 controls not only the entire center control apparatus 1 but also the display operation according to the invention. Although not shown in Fig. 2, the host computer 9 can be an ordinary computer including a CPU, a ROM connected to the CPU via a signal bus, a RAM, an I/O port and other parts. The ROM stores control programs for the control of the entire center control apparatus 1, control programs for the display operation according to the invention, and other necessary programs. Programs for the display operation and data collection and processing are directly related to the invention, and control algorithm of such programs is described below.

Connected to the host computer 9, as I/O peripheral devices, are an input console 10 for entry of necessary data, a display 11 for the display operation, and a printer 12 for hard-copying displayed data. Also connected to the host computer 9 are a disk memory or CD-ROM 13 for storing collected data and for storing in advance map data etc., and a CMT (cassette magnetic tape) memory 14 for the system back-up etc. Further, a modem 15, communication device 17 and antenna 2 for exchanging data with the first to n-th moving bodies 3-1, 3-2, ...., 3-n are also connected to the host computer 9. Where communication with the moving bodies is performed via the relay station 7, commercial lines 18 and a modem 16 are employed between the relay station 7 and the host computer 9.

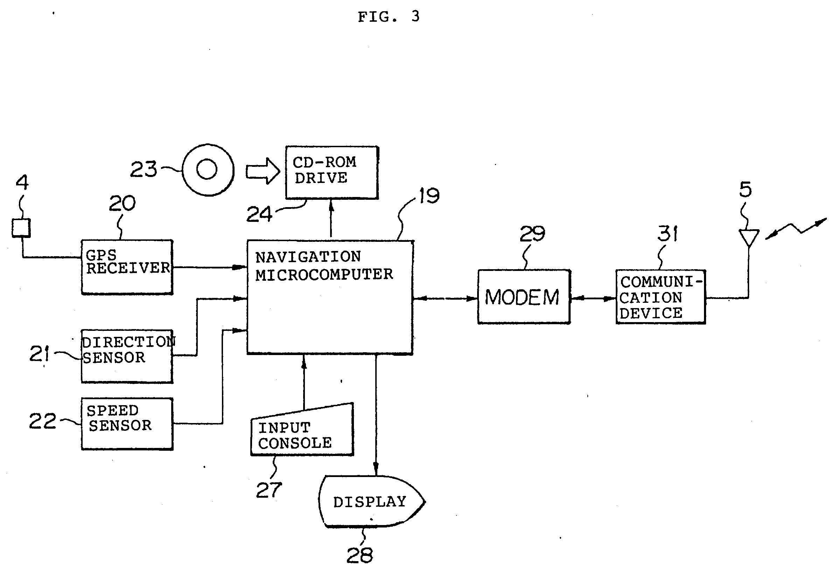

Fig. 3 shows the construction of the first moving body terminal 3-1. Since the other moving body terminals 3-2, ...., 3-n have the same construction, drawings and descriptions for those are omitted here. The first moving body terminal 3-1 basically acts as a navigation device and a communication device, and its main functions are performed by a navigation microcomputer 19, which can be an ordinary microcomputer. Although not shown in Fig. 3, the navigation microcomputer 19 includes a CPU, ROM, RAM, signal bus and I/O port. The navigation function and data communication function are performed in cooperation with peripheral devices (described later) while being controlled by control programs stored in the ROM.

Further, the first moving body terminal 3-1 has a GPS receiver 20 as a position detecting means. The GPS receiver 20, connected to the navigation microcomputer 19, receives a position-determining signal from the artificial satellite 6 by the GPS antenna 4, and provides, based on the received position-determining signal, the navigation microcomputer 19 with a signal indicating a movement distance and a movement direction of the first moving body. On the other hand, separately from the GPS-based position-determining device, the first moving body terminal 3-1 has an independent position-determining device, which consists of a direction sensor 21 such as a magnetic gyro and a speed sensor 22 for detecting a vehicle speed from, e.g., a rotational speed of a crank shaft of the moving body. The navigation microcomputer 19 performs data processing on the basis of a movement direction signal from the direction sensor 21 and a speed signal from the speed sensor 22, to detect a present position of the moving body. Although the first moving body 3-1 may have either one of the two position-determining devices, reliability of the position detecting information will be improved by selecting appropriate device in accordance with a variation of a GPS radio signal state and an environment of the moving body. More specifically, the satellite-based device has an advantage of not being affected by the environment conditions, but will not operate correctly, e.g., in a tunnel. Further, the employment of the two devices provides an advantage that position-determining data of one device can be corrected using that of the other device.

The moving body terminal 3-1 has, as an I/O means, an input console 27 and a display 28. Further, it has a CD-ROM drive 24 for a CD-ROM 23 which stores map data etc. necessary for the navigating operation. A modem 29, communication device 31 and antenna 5 serve to transmit position data of the moving body to the center control apparatus 1 and to receive a message therefrom. The modem 29 operates when communication is performed via the relay station 7.

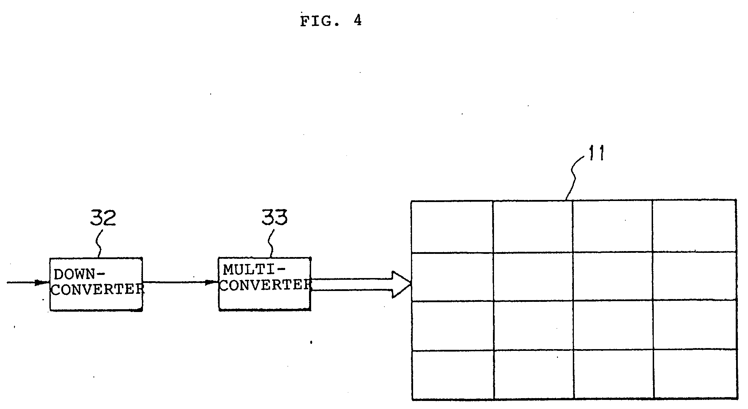

Fig. 4 shows an example of the display 11 that is installed in the center control apparatus 1. In large-scale transportation systems, it may be the case that the moving bodies are controlled by a plurality of operators. In such a case, it would be convenient that the positional information, map, etc. be displayed on a large screen to share those by the operators, instead of displaying those on individual displays for the respective operators. The large screen may be constructed by projection TV units arranged in matrix form. In this case, if an image is simply enlarged while the pixel density (516 scanning lines in the case of usual CRT displays) is kept unchanged, the enlarged image on the display 11 will become too thin. Therefore, it is required to increase the pixel density. To this end, the original image is divided into a plurality of sub-images corresponding to the respective projection TV units of the display 11, and necessary interpolation is performed. A down-converter 32 converts a computer image signal having non-interlaced scanning and a higher horizontal frequency of 24-70 kHz into an interlaced scanning image signal of an ordinary TV system. A multi-converter 33 divides the resultant signal into image signals for the respective TV units.

Next, a display control operation by the center control apparatus 1 for the remote monitoring of the respective moving bodies is described.

First, referring to Fig. 1, the total operation of the remote monitoring and controlling system of moving bodies is briefly described. For instance receiving the position-determining radio signal from the artificial satellite 6, each of the first to n-th moving body terminals 3-1, 3-2, ...., 3-n detects its present location, and transmits the present position data through the path of the antenna 5, antenna 2 and center control apparatus 1 or through the path of the antenna 5, antenna 8, relay station 7 and center control apparatus 1. Collecting the position data from the first to n-th moving body terminals 3-1, 3-2, ...., 3-n, the center control apparatus 1 performs necessary data processing and displays positions of the respective moving bodies.

### Total Display Operation of Moving Body Information

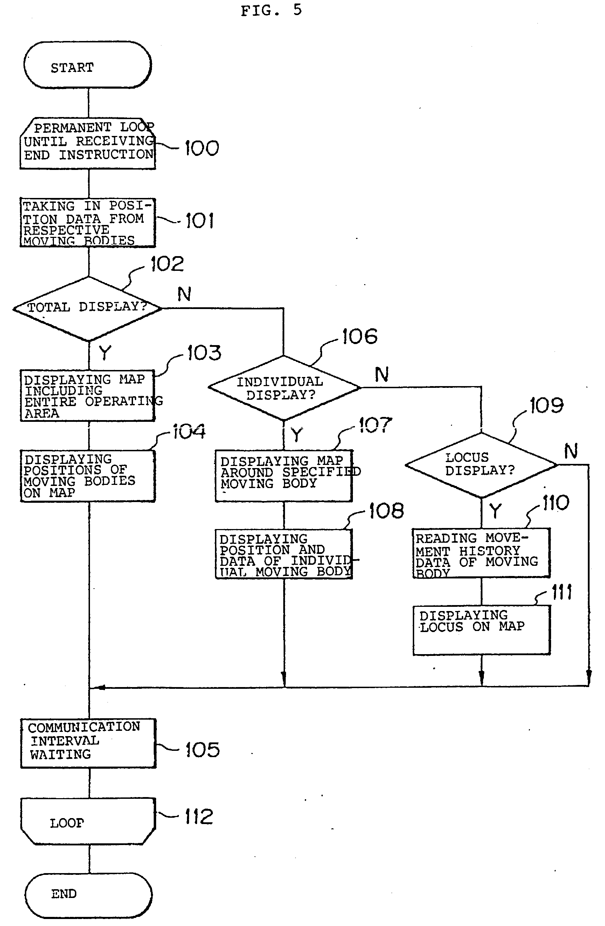

Fig. 5 is a flowchart of the total display operation of the moving body information. This algorithm is stored in the form of control programs in the ROM of the host computer 9 that is installed in the center control apparatus 1.

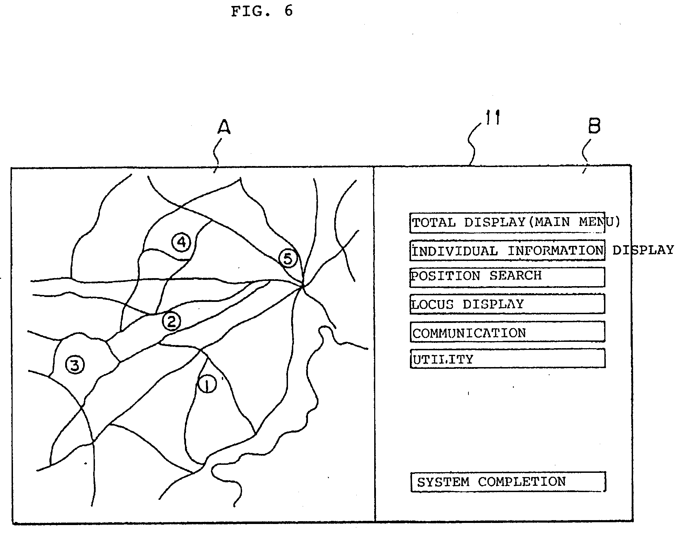

Referring to Fig. 5, in step 100, it is set that the display operation constitutes a loop which permanently continues to work until an end instruction is provided. Then, in step 101, the position data from the first to n-th moving body terminals 3-1, 3-2, ...., 3-n are taken in. In step 102, it is judged whether the display mode is "total display". In the "total display" mode, there is displayed the positions of the respective moving bodies over the entire operating area which is a jurisdictional area of the center control apparatus 1. If the judgment result of step 102 is "yes", the process proceeds to step 103, where a map of the entire operating area is displayed on the display 11. Data of this map is read out from the disk memory 13 shown in Fig. 2. Then, in step 104, the positions of the respective moving bodies are displayed on the display 11, that is, superimposed on the map. Fig. 6 shows an example of a picture to appear on the display 11.

As shown in Fig. 6, a displayed picture consists of a map display area A on the left side and a guidance display area B on the right side. Guidance for operators is displayed in the guidance display area B.

Returning to Fig. 5, while making control to display positions of the respective moving bodies on the map, the host computer 9 executes a waiting process (step 105) for the communication with the first to n-th moving body terminals 3-1, 3-2, ...., 3-n. Then, the process returns to step 101 to repeat the above.

Where the judgment result of step 102 is "no", the process goes to step 106 for judging whether the mode of displaying a position of each moving body is to be effected. If the judgment result of step 106 is "yes", the process goes to step 107 for displaying a map of an area around the location of a specified moving body on the basis of position data of that moving body. Then, in step 108, the position and related data of the specified moving body are superimposed on the map.

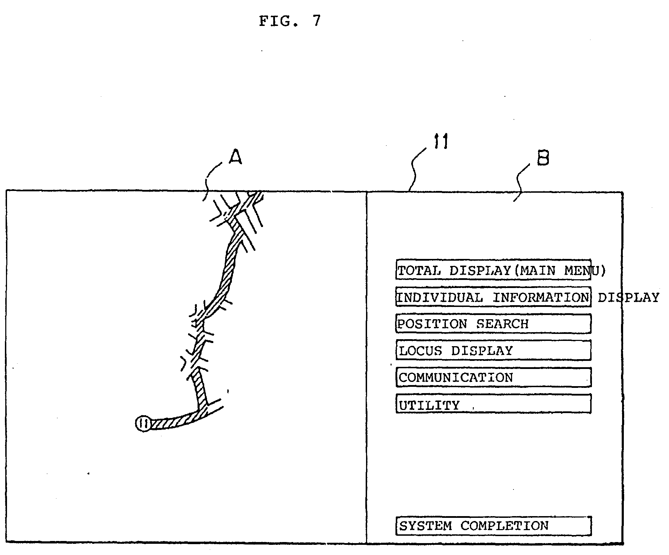

Where the judgment result of step 106 is "no", the process goes to step 109. In step 109, it is judged whether the " "locus display" mode of displaying a movement history, i.e., a locus of a moving body under attention is to be effected. If the judgment is affirmative, the process goes to step 110, where movement history data representing present and past positions of the moving body under attention are read out from the RAM of the host computer 9, and continuous locus data is generated. Then, the process goes to step 111, where a movement locus of the moving body under attention is displayed together with a map. Fig. 7 shows an example of a picture appearing on the display 11, where the movement locus of the moving body under attention until the present time is indicated by hatching.

### Search Display Operation of Moving Body Information

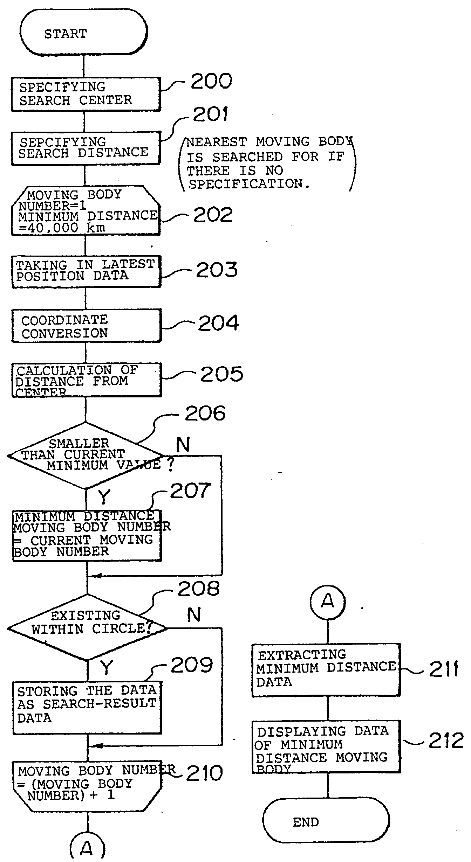

The above total display operation is for the case of displaying positions of the moving bodies in the entire operating area, i.e., the jurisdictional area of the center control apparatus 1. On the other hand, it is often desired that positions of the moving bodies in a particular region of the entire area be known. Fig. 8 is a flowchart of searching positions of the moving bodies in such a case.

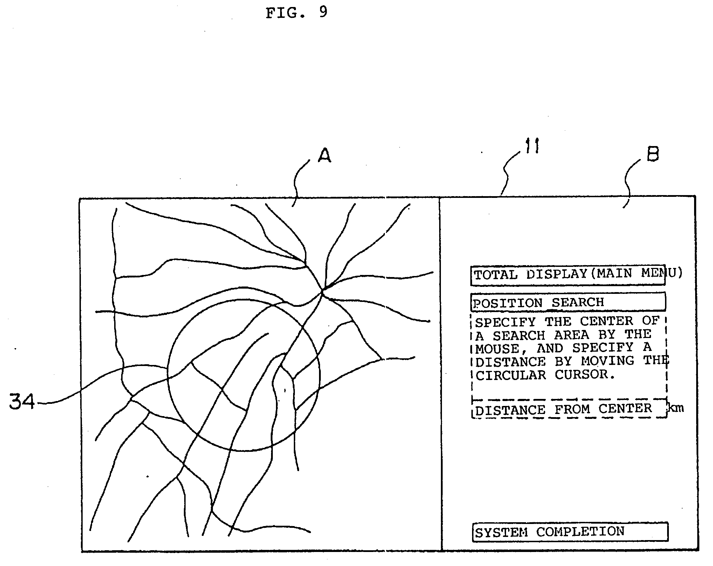

Prior to the position search, a picture as shown in Fig. 9 is first displayed on the display 11. Referring to Fig. 8, when an operator inputs search center data to the host computer 9 through the input console 10, the search center data thus input is taken in in step 200. Then, the operator inputs through the input console 10 search distance data to specify a search distance, i.e., to define the search area. As a modification, where no search distance is specified, a moving body nearest to the search center may be searched for. Next, in step 202, a search operation is started with a moving body number set to 1 and a minimum distance, e.g., at 40,000 km. The search is conducted by repeating processes of steps 202-209 while the moving body number is started from 1 and sequentially increased by one in step 210. Latest position data of a moving body of number 1 is taken in in step 203, subjected to coordinate conversion in step 204, and a distance between the moving body of number 1 and the search center is calculated in step 205. In step 206, it is judged whether the calculated distance value is smaller than the present minimum distance. At the initial stage where there is no data prior to that of the moving body of number 1, the judgment result of step 206 should be "yes", and the process goes to step 207. In step 207, the moving body of number 1 is set as a moving body located at a minimum distance position. Therefore, for the next moving body of number 2, the judgment of step 206 is made with the distance of the moving body of number 1 as the minimum distance. In step 208, it is judged whether the subject moving body of number 1 is located within a circle 34 (see Fig. 9) whose center and radius are the search center (step 200) and the search distance (step 201). If the judgment is affirmative, the moving body number 1 is stored in step 209 as search-result data. If, on the other hand, the judgment is negative, the process jumps to step 210, where the moving body number is increased by one to deal with position data of the next moving body of number 2. In the same manner, the processes of steps 202-210 are repeated. When such processes have completed for all the moving bodies, the process goes to step 211. In step 211, the minimum distance data among the stored distance data of the respective moving bodies is extracted. Then, in step 212, the data of the minimum distance moving body (i.e., the moving body closest to the search center) is displayed.

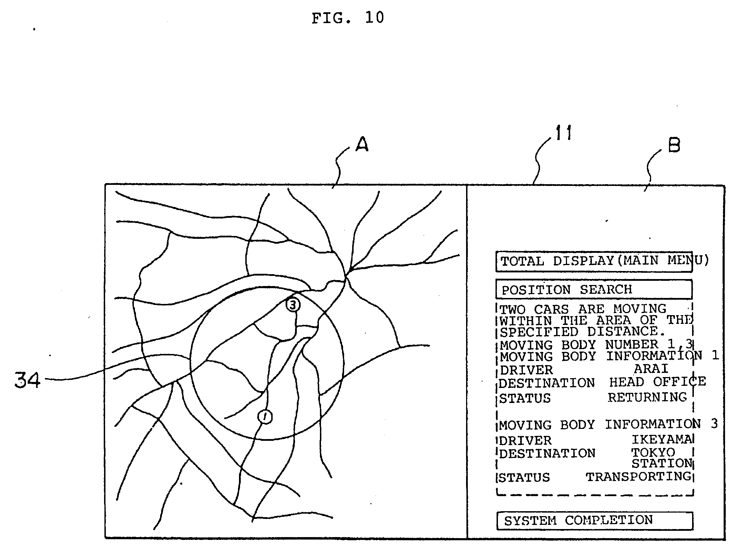

Fig. 10 shows an example of a displayed picture in which a circle 34 of the search area is defined in the processes of step 202-210 and the moving bodies of numbers 1 and 3 exist within that area. In the picture of Fig. 10, the circle 34 indicating the search area and the moving body positions are displayed together with a map in the map display area A, and data related to these moving bodies are displayed in the guidance display area B.

As described in the foregoing, according to the invention, the respective moving body terminals transmit the position data indicating their present positions to the center control apparatus. The center control apparatus displays the present positions of the respective moving bodies such that they are superimposed on a map. As a result, the movement status of a plurality of moving bodies can be intensively monitored in a real-time basis, to realize efficient operation of the moving bodies. Further, a movement history of a specified moving body may be displayed on a map, which makes it possible to monitor the movement status in more detail. Further, the present positions of only the moving bodies existing in a specified smaller area within the total operating area may be displayed, which provides closer control of the moving bodies.

## Claims

1. A remote monitoring and controlling system for a plurality of moving bodies, comprising:
a moving body terminal (3-1,...3-N), at each of the plurality of moving bodies, comprising:
means (4,20;21,22) for detecting a position of an associated moving body; and
means (5,29,31) for transmitting positional information indicating the detected position; and a center control apparatus (1) comprising:
means (2,15,17;16,18) for receiving the positional information;
means (13,14) for storing the received positional information of the plurality of moving bodies; and
control means (9) for producing image information including position data and map data based on the stored positional information; characterised by:
the center control apparatus (1) including means (11) for displaying, in a total display mode, the positions of the plurality of moving bodies in an entire operating area thereof such that they are superimposed on a map including the entire operating area based on the image information; and
the position detecting means comprising:
a GPS receiver (20) for receiving a position determining signal from a GPS satellite, and for producing positional information for the associated moving body based upon the received position determining signal;
a speed detecting device (22), provided in the associated moving body, for detecting the speed of movement of the associated moving body to produce a speed signal;
a movement direction detecting device (21), provided in the associated moving body, for detecting the direction of movement of the associated moving body to produce a direction signal; and
a data processing device (19) for producing the positional information based on the speed signal and the direction signal.

2. The system of claim 1, wherein the GPS receiver (20) produces a movement distance signal and a direction signal based on the received position determining signal; and
the position detecting means further comprises:
an antenna (4) for receiving the position-determining signal; and
a data processing device (19) for producing the positional information of the associated moving body based on the movement distance signal and the direction signal.

3. The system of claim 1, wherein the transmitting means is a radio transmitter (5,31) which transmits the positional information in the form of a radio signal, and wherein the receiving means is a radio receiver (2,17) which converts the received positional information into an electrical signal.

4. The system of claim 1, wherein the transmitting means is a radio transmitter (5,31) which transmits the positional information in the form of a radio signal, and wherein the receiving means is a receiver (8) for commercial telephone lines connected to a relay station (7).

5. The system of claim 1, wherein the control means (9) is arranged to select one of the plurality of moving bodies (3-1,...3-n), and produces the image information including movement history data of the selected moving body, and wherein the displaying means (11) displays, in a locus display mode, a movement history of the selected moving body such that it is superimposed on the map.

6. The system of claim 1, wherein the control means (9) is arranged to select one of the plurality of moving bodies (3-1,...3-n), and produces the image data including the map data of a partial map around the position of the selected moving body; and wherein the display means (11) displays, in an individual display mode, the position of the selected moving body such that it is superimposed on the partial map.

7. A system according to any of claims 1 to 4 wherein:
the control means (9) includes means for searching for part of the plurality of moving bodies existing in a specified area within an entire operating area of the plurality of moving bodies, and for producing image information including position data and map data based on the stored positional information of the part of the plurality of moving bodies; and
the means (11) is arranged to display the positions of the part of the plurality of moving bodies such that they are superimposed on a map including the specified area based on the image information.

## Patentansprüche

1. Fernüberwachungs- und -steuersystem für eine Vielzahl sich bewegender Objekte, das aufweist:
ein Terminal (3-1,...... 3-n) des sich bewegenden Objekts, und zwar an jedem der Vielzahl der sich bewegenden Objekte, das aufweist:
Einrichtungen (4, 20; 21, 22) zum Erfassen einer Position eines zugeordneten, sich bewegenden Objekts; und
Einrichtungen (5, 29, 31) zum Übertragen positionsmäßiger Informationen, die die erfaßte Position anzeigen; und ein Zentralen-Steuergerät (1), das aufweist:
Einrichtungen (2, 15, 17; 16, 18) zum Empfangen der positionsmäßigen Informationen;
Einrichtungen (13, 14) zum Speichern der empfangenen, positionsmäßigen Informationen der Vielzahl der sich bewegenden Objekte; und
eine Steuereinrichtung (9) zum Produzieren von Bildinformationen, die Positionsdaten und Kartendaten basierend auf den gespeicherten, positionsmäßigen Informationen umfassen; gekennzeichnet durch:
das Zentralen-Steuergerät (1) umfaßt eine Einrichtung (11) zum Anzeigen, in einem Gesamtanzeigemodus, der Position der Vielzahl der sich bewegenden Objekte in einem gesamten Betriebsflächenbereich davon derart, daß sie auf einer Karte übereinandergelegt werden können, die den gesamten Betriebsflächenbereich umfaßt, basierend auf den Bildinformationen; und
wobei die Positionserfassungseinrichtung aufweist:
einen GPS-Empfänger (20) zum Empfangen eines Positionsbestimmungssignals von einem GPS-Satelliten und zum Produzieren positionsmäßiger Informationen von dem zugeordneten, sich bewegenden Objekt basierend auf dem empfangenen Positionsbestimmungssignal;
eine Geschwindigkeitserfassungsvorrichtung (22), die in dem zugeordneten, sich bewegenden Objekt vorgesehen ist, zum Erfassen der Geschwindigkeit einer Bewegung des zugeordneten, sich bewegenden Objekts, um ein Geschwindigkeitssignal zu produzieren;
eine Bewegungsrichtungserfassungsvorrichtung (21), die in dem zugeordneten, sich bewegenden Objekt vorgesehen ist, zum Erfassen der Richtung einer Bewegung des zugeordneten, sich bewegenden Objekts, um ein Richtungssignal zu produzieren; und
eine Datenverarbeitungsvorrichtung (19) zum Produzieren der positionsmäßigen Informationen basierend auf dem Geschwindigkeitssignal und dem Richtungssignal.

2. System nach Anspruch 1, wobei der GPS-Empfänger (20) ein Bewegungsentfernungssignal und ein Richtungssignal basierend auf dem empfangenen Positionsbestimmungssignal produziert; und
die Positionserfassungseinrichtung weiterhin aufweist:
eine Antenne (4) zum Empfangen des Positionsbestimmungssignals; und
eine Datenverarbeitungsvorrichtung (19) zum Produzieren der positionsmäßigen Informationen des zugeordneten, sich bewegenden Objekts, basierend auf dem Bewegungsentfernungssignal und dem Richtungssignal.

3. System nach Anspruch 1, wobei die Sendeeinrichtung ein Funksender (5, 31) ist, der die positionsmäßigen Informationen in der Form eines Funksignals sendet, und wobei die empfangende Einrichtung ein Funkempfänger (2, 17) ist, der die empfangenen, positionsmäßigen Informationen in ein elektrisches Signal wandelt.

4. System nach Anspruch 1, wobei die sendende Einrichtung ein Funksender (5, 31) ist, der die positionsmäßigen Informationen in der Form eines Funksignals sendet, und wobei die empfangende Einrichtung ein Empfänger (8) für kommerzielle Telefonleitungen ist, die mit einer Relais-Station (7) verbunden ist.

5. System nach Anspruch 1, wobei die Steuereinrichtung (9) so angeordnet ist, um eines der Vielzahl sich bewegender Objekte (3-1, ... 3-n) auszuwählen, und die Abbildungsinformationen produziert, die Bewegungshistorie-Daten des ausgewählten, sich bewegenden Objekts umfassen, und wobei die Anzeigeeinrichtung (11), in einem Stellen-Anzeigemodus, eine Bewegungshistorie des ausgewählten, sich bewegenden Objekts so anzeigt, daß dies auf der Karte überlegt wird.

6. System nach Anspruch 1, wobei die Steuereinrichtung (9) so angeordnet ist, um eines der Vielzahl sich bewegender Objekte (3-1, ... 3-n) auszuwählen, und die Abbildungsdaten produziert, die Kartendaten einer Teilkarte um die Position des ausgewählten, sich bewegenden Objekts herum umfassen; und wobei die Anzeigeeinrichtung (11), in einem individuellen Anzeigemodus, die Position des ausgewählten, sich bewegenden Objekts so anzeigt, daß sie auf der Teilkarte überlegt wird.

7. System nach einem der Ansprüche 1 bis 4, wobei:
die Steuereinrichtung (9) Einrichtungen zum Suchen nach einem Teil der Vielzahl sich bewegender Objekte, die in einem spezifizierten Flächenbereich innerhalb eines gesamten Betriebsflächenbereichs der Vielzahl der sich bewegenden Objekte existiert, und zum Produzieren von Bildinformationen, die Positionsdaten und Kartendaten basierend auf den gespeicherten, positionsmäßigen Informationen des Teils der Vielzahl der sich bewegenden Objekte umfassen, umfaßt; und
die Einrichtung (11) so angeordnet ist, um die Positionen des Teils der Vielzahl der sich bewegenden Objekte so anzuzeigen, daß sie auf einer Karte überlegt werden, die den spezifizierten Flächenbereich besitzt, basierend auf den Abbildungsinformationen.

## Revendications

1. Un système de surveillance et de commande à distance pour un ensemble de mobiles, comprenant :
un terminal de mobile (3-1, ..., 3-n), à chacun des mobiles de l'ensemble de mobiles, comprenant :
des moyens (4, 20; 21, 22) pour détecter une position d'un mobile associé; et
des moyens (5, 29, 31) pour émettre une information de position indiquant la position détectée; et
un appareil de commande centrale (1) comprenant :
des moyens (2, 15, 17; 16, 18) pour recevoir l'information de position;
des moyens (13, 14) pour enregistrer l'information de position reçue de l'ensemble de mobiles; et
des moyens de commande (9) pour produire une information d'image comprenant des données de position et des données de carte qui sont basées sur l'information de position enregistrée; caractérisé en ce que :
l'appareil de commande centrale (1) comprend des moyens (11) pour visualiser, dans un mode de visualisation totale, les positions de l'ensemble de mobiles dans une zone d'exploitation complète de ceux-ci, de façon que ces positions soient superposées sur une carte comprenant la zone d'exploitation complète, sur la base de l'information d'image; et
les moyens de détection de position comprennent :
un récepteur GPS (20) pour recevoir un signal de détermination de position provenant d'un satellite GPS, et pour produire une information de position pour le mobile associé, basée sur le signal de détermination de position qui est reçu;
un dispositif de détection de vitesse (22), incorporé dans le mobile associé, pour détecter la vitesse de déplacement du mobile associé, de façon à produire un signal de vitesse;
un dispositif de détection de direction de déplacement (21), incorporé dans le mobile associé, pour détecter la direction de déplacement du mobile associé, de façon à produire un signal de direction; et
un dispositif de traitement de données (19) pour produire l'information de position sur la base du signal de vitesse et du signal de direction.

2. Le système de la revendication 1, dans lequel le récepteur GPS (20) produit un signal de distance de déplacement et un signal de direction, sur la base du signal de détermination de position qui est reçu; et
les moyens de détection de position comprennent en outre :
une antenne (4) pour recevoir le signal de détermination de position; et
un dispositif de traitement de données (19) pour produire l'information de position du mobile associé, sur la base du signal de distance de déplacement et du signal de direction.

3. Le système de la revendication 1, dans lequel les moyens d'émission consistent en un radioémetteur (5, 31) qui émet l'information de position sous la forme d'un signal hertzien, et dans lequel les moyens de réception consistent en un radiorécepteur (2, 17) qui convertit en un signal électrique l'information de position qui est reçue.

4. Le système de la revendication 1, dans lequel les moyens d'émission consistent en un radioémetteur (5, 31) qui émet l'information de position sous la forme d'un signal hertzien, et dans lequel les moyens de réception consistent en un récepteur (8) pour des lignes téléphoniques commerciales connectées à une station relais (7).

5. Le système de la revendication 1, dans lequel les moyens de commande (9) sont conçus pour sélectionner l'un des mobiles de l'ensemble de mobiles (3-1, ..., 3-n), et ils produisent l'information d'image comprenant des données d'historique de déplacement du mobile sélectionné, et dans lequel les moyens de visualisation (11) visualisent, dans un mode de visualisation de chemin parcouru, un historique de déplacement du mobile sélectionné, d'une manière telle qu'il soit superposé sur la carte.

6. Le système de la revendication 1, dans lequel les moyens de commande (9) sont conçus pour sélectionner un mobile parmi l'ensemble de mobiles (3-1, ..., 3-n), et ils produisent les données d'image comprenant des données de carte d'une carte partielle autour de la position du mobile sélectionné; et dans lequel les moyens de visualisation (11) visualisent, dans un mode de visualisation individuel, la position du mobile sélectionné d'une manière telle qu'elle soit superposée sur la carte partielle.

7. Un système selon l'une quelconque des revendications 1 à 4, dans lequel :
les moyens de commande (9) comprennent des moyens destinés à rechercher une partie de l'ensemble de mobiles se trouvant dans une zone spécifiée à l'intérieur d'une zone d'exploitation complète de l'ensemble de mobiles, et à produire une information d'image comprenant des données de position et des données de carte, sur la base de l'information de position enregistrée de la partie de l'ensemble de mobiles; et
les moyens de visualisation (11) sont conçus pour visualiser les positions de la partie de l'ensemble de mobiles, de façon qu'elles soient superposées sur une carte comprenant la zone spécifiée, sur la base de l'information d'image.
